(19) Europäisches Patentamt / European Patent Office / Office européen des brevets

(11) **EP 4 737 615 A1**

(12) **EUROPEAN PATENT APPLICATION**
published in accordance with Art. 153(4) EPC

(43) Date of publication:
06.05.2026 Bulletin 2026/19

(21) Application number: 24860429.0

(22) Date of filing: 29.08.2024

(51) International Patent Classification (IPC):
C25B 13/02 (2006.01)     C25B 13/08 (2006.01)
C25B 11/052 (2021.01)    C25B 9/23 (2021.01)
C25B 11/032 (2021.01)    B01J 37/02 (2006.01)
C25B 3/26 (2021.01)      C25B 1/04 (2021.01)
C25B 1/23 (2021.01)

(52) Cooperative Patent Classification (CPC):
B01J 37/02; C25B 1/04; C25B 1/23; C25B 3/26;
C25B 9/23; C25B 11/032; C25B 11/052;
C25B 13/02; C25B 13/08; Y02E 60/50

(86) International application number:
PCT/KR2024/012952

(87) International publication number:
WO 2025/048510 (06.03.2025 Gazette 2025/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 01.09.2023 KR 20230116359

(71) Applicant: **LG Chem, Ltd.**
**Seoul 07336 (KR)**

(72) Inventors:
• **HAN, Yu Jin**
  **Daejeon 34122 (KR)**
• **NOH, Tae Geun**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR AND ELECTROCHEMICAL CELL COMPRISING SAME**

(57) The present invention relates to a separation membrane having an anode catalyst layer coated on one surface of a porous substrate, and more particularly, to a separation membrane which enables ions to move smoothly through the pores of a porous substrate, and has a low overvoltage by coating the anode catalyst layer on one surface of the separation membrane, and an electrochemical cell including the same.

EP 4 737 615 A1

**Description**

**[Technical Field]**

CROSS-REFERENCE TO RELATED APPLICATION

Th present application claims the benefit of priority to Korean Patent Application No. 10-2023-0116359 filed on September 1, 2023, the disclosure of which is incorporated herein by reference in its entirety.

Technical Field

The present invention relates to a separation membrane and an electrochemical cell including the same.

**[Background Art]**

Carbon dioxide is a greenhouse gas that causes global warming and must be reduced. Methods such as capture, chemical conversion, or electrochemical conversion are known as methods of reducing carbon dioxide. Among them, the electrochemical conversion method can precisely control the components so that other synthetic gases can be produced, resulting in economic benefits over simply removing carbon dioxide. In addition, carbon dioxide can be electrolyzed with water to obtain organic substances such as carbon monoxide, ethylene, methane, formic acid, formate, various hydrocarbons, and aldehyde or alcohol.

The process of electrochemically decomposing and converting carbon dioxide using an electrochemical cell is as follows. When current is applied while supplying water to an anode, water is decomposed to generate oxygen gas and at the same time hydrogen ions and electrons, wherein the electrons move to a cathode through an external conductive wire. Carbon dioxide and water vapor are supplied to the cathode, wherein the carbon dioxide and water vapor react with the electrons transferred from the anode and decompose into carbon monoxide and hydroxide ions. The generated hydroxide ions move to the anode through a separation membrane, and the moved hydroxide ions are oxidized to generate oxygen gas and at the same time water and electrons. Through the above process, the electrochemical decomposition reaction of carbon dioxide proceeds.

Meanwhile, an ion separation membrane such as a Nafion separation membrane is widely used as a separation membrane applied to the electrochemical cell, but the Nafion separation membrane has disadvantages in that it is expensive and have limited pH conditions that can be used as a cation exchange separation membrane. Specifically, when the Nafion separation membrane is used under basic or neutral electrolyte conditions used for carbon dioxide electrolysis, there is a problem that the performance of the electrochemical cell deteriorates, such as a slow ion permeation rate and a high overvoltage. On the other hand, since an anion exchange membrane that can be used suitably with a basic electrolyte is more expensive than the Nafion separation membrane, it is uneconomical in mass production and commercialization. Therefore, it is necessary to develop a separation membrane that has performance equivalent to or higher than that of the ion exchange membrane such as the cation exchange membrane or the anion exchange membrane and is also inexpensive.

**[Disclosure]**

**[Technical Problem]**

The present invention has been devised to solve the problems of the prior art as mentioned above, and aims to provide a separation membrane that uses an inexpensive porous substrate as a material for the separation membrane, and also has performance equivalent to or higher than that of a conventional ion exchange membrane by coating an anode catalyst layer on one surface of the porous substrate.

Another object of the present invention is to provide an electrochemical cell including the separation membrane.

**[Technical Solution]**

In order to solve the problems, the present invention provides a separation membrane and an electrochemical cell including the same.

(1) The present invention provides a separation membrane including a porous substrate and an anode catalyst layer, wherein the anode catalyst layer includes metal particles and a binder, and the anode catalyst layer is coated on any one surface of the porous substrate.

(2) The present invention provides the separation membrane according to (1) above, wherein the pores of the porous substrate have an average diameter of 10 nm or more and 500 nm or less.

(3) The present invention provides the separation membrane according to (1) or (2) above, wherein the porosity of the porous substrate is 50% by volume or more and 95% by volume or less.

(4) The present invention provides the separation membrane according to any one of (1) to (3) above, wherein the thickness of the porous substrate is 10 $\mu$m or more and 500 $\mu$m or less.

(5) The present invention provides the separation membrane according to any one of (1) to (4) above, wherein the porous substrate is at least one selected from the group consisting of polyethersulfone, polytetrafluoroethylene, polyethylene, polypropylene, polyethylene terephthalate, polyester, polyetheretherketone, polyaryletherketone, polyetherimide, polyamideimide, polybenzimidazole, polyethylenenaphthalene, polyvinylidene fluoride, cellulose acetate, and nylon.

(6) The present invention provides the separation membrane according to any one of (1) to (5) above, wherein the content per unit area of the oxidation catalyst in the anode catalyst layer is 0.1 mg/cm$^2$ or more and 3 mg/cm$^2$ or less.

(7) The present invention provides the separation membrane according to any one of (1) to (6) above, wherein the thickness of the anode catalyst layer is 1 $\mu$m or more and 30 $\mu$m or less.

(8) The present invention provides the separation membrane according to any one of (1) to (7) above, wherein the metal particles have an average particle diameter of primary particles ($D_{SEM}$) of 20 nm or more and 30 nm or less.

(9) The present invention provides the separation membrane according to any one of (1) to (8) above, wherein the metal particles have an average particle diameter of secondary particles ($D_{50}$) of 100 nm or more and 2,000 nm or less.

(10) The present invention provides an electrochemical cell including the separation membrane according to any one of (1) to (9) above and a cathode, wherein the cathode is in contact with the other surface of the separation membrane on which the anode catalyst layer is not coated.

(11) The present invention provides the electrochemical cell according to (10) above, wherein the cathode has a cathode catalyst layer coated on one surface of a gas diffusion layer.

(12) The present invention provides a method for manufacturing an electrochemical cell, the method including the steps of: (S10) manufacturing a separation membrane by coating an anode catalyst layer on any one surface of a porous substrate; and (S20) disposing a cathode to contact the other surface of the separation membrane which is not coated with the anode catalyst layer in step (S10), wherein the anode catalyst layer includes metal particles and a binder.

(13) The present invention provides the method for manufacturing an electrochemical cell according to (12) above, wherein the step (S10) includes the steps of: (S11) preparing an anode catalyst ink by mixing metal particles, a binder, and a solvent; (S12) applying the anode catalyst ink to a transfer film to prepare an anode catalyst layer; and (S13) transferring the anode catalyst layer to any one surface of the porous substrate to coat the anode catalyst layer.

## [Advantageous Effects]

The separation membrane of the present invention has the advantages of high carbon dioxide conversion rate and low overvoltage because ions can be smoothly permeated even under basic or neutral electrolyte conditions by using a porous substrate.

In addition, the separation membrane of the present invention has the advantage of being suitable for mass production because it is inexpensive compared to an ion exchange membrane.

## [Best Modes of the Invention]

Hereinafter, the present invention will be described in more detail to help understand the present invention.

The terms or words used in the specification should not be construed as being limited to their ordinary or dictionary meanings, but should be interpreted as meanings and concepts consistent with the technical spirit of the present invention, based on the principle that the inventor may adequately define the concepts of terms to best describe his invention.

The terms used in the specification are used only to describe exemplary embodiments, and are not intended to limit the present invention. Singular expressions include plural expressions unless the context clearly implies otherwise.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the specification, the term "primary particle" refers to a minimum particle unit distinguished as a single lump when metal particles are observed through a scanning electron microscope (SEM), and may be formed of multiple crystal grains. The average particle diameter($D_{SEM}$) of the primary particles can be measured using a scanning electron microscope image.

In the specification, the term "average particle diameter ($D_{SEM}$)" means an arithmetic average value calculated by measuring the particle diameters of the primary particles observed in the scanning electron microscope image. Specifically, the average particle diameter can be measured by measuring the length of the diameter of the primary particles observed in the scanning microscope image and then calculating the arithmetic mean value of the length.

In the specification, the term "secondary particle" refers to a secondary structure formed by aggregating a plurality of primary particles. The average particle diameter($D_{50}$) of the secondary particle can be measured using a particle size analyzer.

In the specification, the term "average particle diameter ($D_{50}$)" means a particle diameter at 50% point of a cumulative volume distribution according to the particle diameter. The average particle diameter ($D_{50}$) can be measured by dispersing the powder to be measured in a dispersion medium and then introducing it into a commercially available laser diffraction particle size measuring device (e.g., Malvern Panlytical, Zetasizer), measuring a difference in diffraction patterns according to the particle size when the particles pass through the laser beam to obtain a particle size distribution, and calculating a particle diameter at a point that is 50% of the cumulative volume distribution according to the particle size in the measuring device.

In the specification, the term "average diameter" means an average diameter measured by the BET (Brunauer-Emmett-Teller Analysis) method. For example, the average diameter of pores of a porous substrate can be measured by the BET method in which an object to be measured is adsorbed in a gas to measure the specific surface area, and pore size and distribution of the sample surface.

In the specification, the term "porosity" means the volume ratio of pores (small holes or empty spaces) of a porous material, and for example, the porosity can be derived by measuring the density, weight, and volume of a material and using them to perform reverse calculation. Specifically, the volume of the separation membrane can be calculated from the thickness and area of the manufactured separation membrane, and the density of the separation membrane can be calculated using the weight of the separation membrane and the calculated volume of the separation membrane. Next, the packing density of the separation membrane can be calculated using the density of the material itself without pores included in the separation membrane and the calculated density of the separation membrane, and then the porosity (% by volume) can be derived by Equation 1 below:

[Equation 1]

$$\text{Porosity (volume\%)} = (1 - \text{packing density}) \times 100$$

In the specification, the "content per unit area" is measured by dividing the weight difference between a porous substrate coated with a catalyst layer and a porous substrate before coating by the area of one surface of the porous substrate, and multiplying the divided value by the weight ratio of the target material in the catalyst layer.

In the specification, the term "separation membrane" refers to a separation membrane that can be applied to an electrochemical device such as carbon dioxide electrolysis, water electrolysis, or fuel cell to transmit cations such as hydrogen ions ($H^+$) or anions such as hydroxide ions ($OH^-$). For example, the separation membrane may be a porous substrate having pores through which hydroxide ions can pass.

In the specification, the term "porous substrate" refers to a substrate having a plurality of pores formed therein, through which gas or liquid can pass. The pore refers to a region in the porous substrate where no constituent material of the porous substrate exists, and the shape of the pores may be not only a spherical shape, but also a polyhedral shape in which straight or curved elements intersect to have length, width, and height, or an amorphous shape. For example, the porous substrate may be in the form of a sheet, and an electrolyte containing ions can permeate through the pores of the porous substrate.

In the specification, the term "cathode" may refer to an electrode in which a reduction reaction of a reactant occurs in an electrochemical device such as carbon dioxide electrolysis, water electrolysis, or fuel cell.

In the specification, the term "anode" may refer to an electrode in which an oxidation reaction of a reactant occurs in an electrochemical device such as carbon dioxide electrolysis, water electrolysis, or fuel cell.

In the specification, the term "electrochemical cell" refers to a device including a cathode, an anode, and a separation membrane disposed between the cathode and the anode. The electrochemical cell may be applied to an electrochemical conversion device capable of producing a useful chemical through electrochemical conversion, such as an electrochemical device such as carbon dioxide electrolysis, water electrolysis, or fuel cell.

## Separation membrane

The present invention provides a separation membrane.

According to an embodiment of the present invention, the separation membrane may include a porous substrate and an anode catalyst layer, wherein the anode catalyst layer includes metal particles and a binder, and the anode catalyst layer is coated on any one surface of the porous substrate.

The separation membrane of the present invention is characterized by including a porous substrate having pores through which ions generated from a cathode can move. In this case, the porous substrate may be in the form of a sheet on which an anode catalyst layer can be coated in a flat form on one surface of the substrate. In the separation membrane of the present invention, ions generated from the cathode reach the anode catalyst layer through the pores of the separation membrane in a state of being contained in the electrolyte, so that the ions can smoothly reach the anode catalyst layer according to the movement of the electrolyte even without using an ion exchange membrane.

Compared to a case where the anode catalyst layer is coated on a separate substrate other than a separation membrane, the separation membrane of the present invention can reduce the overvoltage of the electrode by reducing the interfacial resistance between the separation membrane and the anode catalyst layer because the anode catalyst layer is coated on one surface of the porous substrate. In addition, since the hydroxide ions generated at the cathode can pass through the separation membrane and then immediately meet the anode catalyst layer coated on one surface of the porous substrate, the movement distance of the ions is shortened, which has the advantage of improving the performance of the electrode. On the other hand, in the case of a separation membrane in which a cathode catalyst layer is coated on one surface of a porous substrate and an anode catalyst layer is not coated on the other surface, unlike the separation membrane of the present invention, ions that pass through the separation membrane may float in the electrolyte without immediately meeting the anode catalyst layer, and thus the effect of improving the performance of the electrode may not appear. In addition, when the cathode catalyst layer is coated on one surface of a porous substrate and cathode catalyst particles are attached to one surface of the porous substrate, the resistance may increase as the catalyst particles hinder the movement of hydroxide ions to the anode through the separation membrane, and as a result, the overvoltage of the electrochemical cell may increase. On the other hand, the separation membrane is characterized in that the cathode catalyst layer is not coated on the other surface of the porous substrate. If the cathode catalyst layer is coated on the other surface of the porous substrate, the thickness of the separation membrane may become thicker, which may increase resistance due to the separation membrane, resulting in problems such as increased overvoltage. That is, the separation membrane is characterized in that no material, including a cathode catalyst layer, is coated on, or attached to the other surface of the porous substrate on which the anode catalyst layer is not coated, and only the constituent materials and pores of the porous substrate exist.

The metal particles included in the anode catalyst layer of the present invention may be metal particles including at least one element selected from the group consisting of Ir, Pt, Au, Pd, Ag, Rh, Ru, Ni, Al, Mo, Cr, Cu, Ti, W, and Ta, and the listed elements may act as catalysts for oxidation reactions in the anode catalyst layer to lower activation energy for the oxidation reaction of water. Specifically, the metal particles may be in the form of IrO(OH) attached to the surface of a $TiO_2$ support, and the iridium in the metal particles may act as a catalyst for the oxidation reaction of water and hydroxide ions at the anode to promote the generation of oxygen gas.

The anode catalyst layer is coated on one surface of the porous substrate of the present invention, but the internal pores of the porous substrate may not be filled with metal particles constituting the anode catalyst layer. Since the internal pores of the porous substrate are not filled with metal particles, it is possible to prevent the risk of metal particles reaching the cathode during operation of the electrochemical cell and causing the function of the electrochemical cell to be lost. In addition, since the internal pores of the porous substrate are not filled with metal particles, ions can move smoothly through the pores, thereby improving the performance of the electrochemical cell.

In addition, the anode catalyst layer of the present invention includes a binder. The binder is attached to the surface of the metal particles to prevent agglomeration between the metal particles, thereby enabling the metal particles to be evenly distributed in the anode catalyst layer. Additionally, the binder functions as an adhesive to prevent metal particles from detaching from one surface of the porous substrate. Specifically, the binder may be an ionomer such as Nafion, Sustainion, or Aemion, wherein the ionomer can be attached to the surface of the metal particles in the anode catalyst layer to prevent aggregation between the metal particles and at the same time, can prevent the metal particles from being detached from one surface of the porous substrate by connecting the metal particles to one surface of the porous substrate.

According to one embodiment of the present invention, the pores of the porous substrate may have an average diameter of 10 nm or more and 500 nm or less, and specifically, the average diameter of the pores may be 10 nm or more, 20 nm or more, 30 nm or more, 40 nm or more, 50 nm or more, 60 nm or more, 70 nm or more, 80 nm or more, 90 nm or more, 100 nm or more, 110 nm or more, 120 nm or more, 130 nm or more, 140 nm or more, 150 nm or more, 160 nm or more, 170 nm or more, 180 nm or more, 190 nm or more, or 200 nm or more, and further may be 500 nm or less, 490 nm or less, 480 nm or less, 470 nm or less, 460 nm or less, 450 nm or less, 440 nm or less, 430 nm or less, 420 nm or less, 410 nm or less, 400 nm or less, 390 nm or less, 380 nm or less, 370 nm or less, 360 nm or less, 350 nm or less, 340 nm or less, 330 nm or less, 320 nm or less, 310 nm or less, or 300 nm or less. When the average diameter of pores of the porous substrate satisfies the above range, the ions generated at the cathode may smoothly move through the pores of the separation membrane. Therefore, the carbon dioxide conversion rate of the electrochemical cell including the separation membrane can be increased, thereby improving the performance of the electrochemical cell. In addition, when the average pore diameter satisfies the above range, the mechanical properties of the separation membrane are superior compared to when the pore diameter is excessively large, so that the electrochemical cell including the separation membrane can be operated stably.

According to one embodiment of the present invention, the porosity of the porous substrate may be 15 vol% or more and 95 vol% or less, and specifically, the porosity may be 15 vol% or more, 20 vol% or more, 25 vol% or more, 30 vol% or more, 35 vol% or more, 40 vol% or more, 45 vol% or more, 50 vol% or more, 55 vol% or more, 60 vol% or more, 65 vol% or more, and further may be 95 vol% or less, 90 vol% or less, 85 vol% or less, 80 vol% or less, 77 vol% or less, 75 vol% or less, 70 vol% or less, and 69 vol% or less. The porosity refers to the ratio of the volume of pores to the total volume of the porous substrate, and when the porosity of the porous substrate satisfies the above range, pores exist sufficiently in the porous substrate so that ions can move smoothly through the pores, and thus the performance of the electrochemical cell including the separation membrane can be improved. In addition, when the porosity of the porous substrate satisfies the above range, the mechanical properties of the separation membrane are excellent, so that the electrochemical cell including the separation membrane can be stably operated.

According to one embodiment of the present invention, the thickness of the porous substrate may be 10 $\mu$m or more and 500 $\mu$m or less, and specifically, the thickness of the porous substrate may be 10 $\mu$m or more, 50 $\mu$m or more, 100 $\mu$m or more, 125 $\mu$m or more, 150 $\mu$m or more, 200 $\mu$m or more, 220 $\mu$m or more, or 250 $\mu$m or more, and further may be 500 $\mu$m or less, 450 $\mu$m or less, 400 $\mu$m or less, 350 $\mu$m or less, 300 $\mu$m or less, or 250 $\mu$m or less. When the thickness of the porous substrate satisfies the above range, the resistance of the separation membrane is lowered compared to when the separation membrane is excessively thick, and thus the performance of the electrode can be improved. In addition, since the mechanical properties of the separation membrane are excellent compared to cases where the thickness of the separation membrane is excessively thin, the electrochemical cell including the separation membrane can be stably operated.

According to one embodiment of the present invention, the porous substrate may be at least one selected from the group consisting of polyethersulfone, polytetrafluoroethylene, polyethylene, polypropylene, polyethylene terephthalate, polyester, polyetheretherketone, polyaryletherketone, polyetherimide, polyamideimide, polybenzimidazole, polyethylenenaphthalene, polyvinylidene fluoride, cellulose acetate, and nylon. Since the porous substrates listed above contain a plurality of pores in the substrate, the ions generated at the anode can move to the cathode through the pores, and the cost thereof is low compared to an ion exchange membrane. Specifically, the porous substrate may be polyethersulfone, wherein the polyethersulfone contains sufficient pores in the substrate so that hydroxide ions generated at the anode can smoothly move to the cathode through the pores. Additionally, the polyethersulfone has the advantage of being less expensive than ion exchange membranes such as Nafion and Aemion, making it suitable for mass production.

According to one embodiment of the present invention, the content per unit area of the oxidation catalyst in the anode catalyst layer may be 0.1 mg/cm$^2$ or more and 3.0 mg/cm$^2$ or less, and specifically, the content per unit area of the oxidation catalyst may be 0.1 mg/cm$^2$ or more, 0.2 mg/cm$^2$ or more, 0.3 mg/cm$^2$ or more, 0.4 mg/cm$^2$ or more, 0.5 mg/cm$^2$ or more, 0.6 mg/cm$^2$ or more, 0.7 mg/cm$^2$ or more, 0.8 mg/cm$^2$ or more, 0.9 mg/cm$^2$ or more, 1.0 mg/cm$^2$ or more, or 1.1 mg/cm$^2$ or more, and also 3.0 mg/cm$^2$ or less, 2.9 mg/cm$^2$ or less, 2.8 mg/cm$^2$ or less, 2.7 mg/cm$^2$ or less, 2.6 mg/cm$^2$ or less, 2.5 mg/cm$^2$ or less, 2.4 mg/cm$^2$ or less, 2.3 mg/cm$^2$ or less, 2.2 mg/cm$^2$ or less, 2.1 mg/cm$^2$ or less, 2.0 mg/cm$^2$ or less, 1.9 mg/cm$^2$ or less, 1.8 mg/cm$^2$ or less, 1.7 mg/cm$^2$ or less, 1.6 mg/cm$^2$ or less, 1.5 mg/cm$^2$ or less, 1.4 mg/cm$^2$ or less, 1.3 mg/cm$^2$ or less, 1.2 mg/cm$^2$ or less, 1.1 mg/cm$^2$ or less, 1.0 mg/cm$^2$ or less, 0.9 mg/cm$^2$ or less, 0.8 mg/cm$^2$ or less, 0.7 mg/cm$^2$ or less. As described above, the oxidation catalyst may include at least one element selected from the group consisting of Ir, Pt, Au, Pd, Ag, Rh, Ru, Ni, Al, Mo, Cr, Cu, Ti, W, and Ta included in the metal particles of the present invention, and the oxidation catalyst can act as a catalyst for an oxidation reaction in the anode catalyst layer to lower the activation energy of the oxidation reaction of water. When the content per unit area of the oxidation catalyst in the anode catalyst layer satisfies the above range, the oxidation reaction of water and hydroxide ions can sufficiently occur in the anode catalyst layer. As a result, the number of electrons moving to the cathode through a conductive wire increases, which can further promote the carbon dioxide reduction reaction at the cathode. In addition, it can be economical because the electrode performance is improved to a high degree compared to the cost of the oxidation catalyst introduced in the above range. Specifically, according to one embodiment of the present invention, the metal particles may be in the form of IrO(OH) attached to the surface of a TiO$_2$ support, and the content per unit area of iridium, which is an oxidation catalyst in the anode catalyst layer, may be 0.1 mg/cm$^2$ or more and 3.0 mg/cm$^2$ or less. When the content of iridium in the anode catalyst layer is as described above, the oxidation reaction of water may sufficiently occur in the anode catalyst layer, thereby further promoting the carbon dioxide reduction reaction at the cathode.

According to one embodiment of the present invention, the thickness of the anode catalyst layer may be 1 $\mu$m or more and 50 $\mu$m or less, and specifically, the thickness of the anode catalyst layer may be 1 $\mu$m or more, 5 $\mu$m or more, 10

μm or more, 15 μm or more, or 20 μm or more, and further may be 50 μm or less, 45 μm or less, 40 μm or less, 35 μm or less, 30 μm or less, 25 μm or less, 20 μm or less, or 15 μm or less. When the thickness of the anode catalyst layer satisfies the above range, the electrode catalyst layer can have excellent mechanical properties while not having an excessively thick catalyst layer, thereby lowering the resistance of the separation membrane. In addition, since the metal particles can be sufficiently included in the anode catalyst layer, the oxidation reaction of water and the oxidation reaction of hydroxide ions can be actively performed in the anode catalyst layer, and as a result, the carbon dioxide conversion reaction at the cathode can be further promoted.

According to one embodiment of the present invention, the metal particles may have an average particle diameter($D_{SEM}$) of primary particles of 20 nm or more and 30 nm or less, and specifically, the average particle diameter of the primary particles may be 20 nm or more, 21 nm or more, 22 nm or more, 23 nm or more, 24 nm or more, or 25 nm or more, and further may be 30 nm or less, 29 nm or less, 28 nm or less, 27 nm or less, or 26 nm or less. When the average particle diameter ($D_{SEM}$) of the primary particles is within the above range, the primary particles have a high specific surface area, and thus hydroxide ions and water may be actively oxidized on the surface of the metal particles. As a result, the number of electrons moving to the cathode through the conductive wire increases, which can further promote the carbon dioxide reduction reaction at the cathode. Specifically, the primary particle may be formed of a crystal grain or multiple crystal grains in which one or more particles having IrO(OH) attached to the surface of a $TiO_2$ support are aggregated, and the average particle diameter of the crystal grain or multiple crystal grains may be 20 nm or more and 30 nm or less. Iridium, an oxidation catalyst, can actively promote the oxidation reaction of water and hydroxide ions on the surface of the primary particles having the average particle diameter.

According to one embodiment of the present invention, the metal particles may have an average particle diameter($D_{50}$) of secondary particles of 100 nm or more and 2,000 nm or less, and specifically, the average particle diameter of the secondary particles may be 100 nm or more, 200 nm or more, 300 nm or more, 400 nm or more, 500 nm or more, or 600 nm or more, and further may be 2,000 nm or less, 1,900 nm or less, 1,800 nm or less, 1,700 nm or less, 1,600 nm or less, 1,500 nm or less, 1,400 nm or less, 1,300 nm or less, 1,200 nm or less, 1,100 nm or less, 1,000 nm or less, 900 nm or less, 800 nm or less, or 700 nm or less. When the average particle diameter ($D_{50}$) of the secondary particles is within the above range, the secondary particles have a high specific surface area, and thus hydroxide ions and water can be actively oxidized on the surface of the metal particles. In addition, since the average particle size of the secondary particles is sufficiently large, pores for hydroxide ions or water particles to penetrate into the interior of the secondary particles can be sufficiently formed on the surface of the secondary particles. As a result, the oxidation reactions of hydroxide ions or water particles can also actively occur not only on the surface of the secondary particles but also inside the secondary particles. As a result, the number of electrons moving to the cathode through the conductive wire increases, which can further promote the carbon dioxide reduction reaction at the cathode. Specifically, the secondary particles may be in the form of a secondary structure formed by a plurality of primary particles being aggregated again, wherein the primary particles are formed of a crystal grain or multiple crystal grains in which one or more particles having IrO(OH) attached to the surface of a $TiO_2$ support are aggregated, and the average particle diameter of the secondary structure may be 100 nm or more and 2,000 nm or less. Iridium, an oxidation catalyst, can actively promote the oxidation reaction of water and hydroxide ions on the surface and inside of the secondary particles having the above average particle diameter.

**Electrochemical cell**

The present invention provides an electrochemical cell including the separation membrane.

According to one embodiment of the present invention, the electrochemical cell may include the separation membrane and a cathode, wherein the cathode may be in contact with the other surface of the separation membrane on which the anode catalyst layer is not coated.

The separation membrane may have a form in which an anode catalyst layer is coated on any one surface of a porous substrate, wherein the anode catalyst layer may include metal particles and a binder. In addition, the cathode may be in contact with the other surface of the separation membrane, that is, the other surface of the porous substrate, on which the anode catalyst layer is not coated. Thus, in the electrochemical cell of the present invention, the anode catalyst layer coated on one surface of the porous substrate is an anode, and the cathode may be a cathode catalyst layer coated on a gas diffusion layer, or a cathode catalyst layer coated on a substrate separate from the porous substrate and the gas diffusion layer. That is, the electrochemical cell of the present invention is characterized in that the cathode catalyst layer is not coated on the other surface of the porous substrate. This is because, if the cathode catalyst layer is coated on the other surface of the porous substrate, the cathode catalyst particles may impede the movement of hydroxide ions to the anode, which may increase resistance and, as a result, increase the overvoltage. Additionally, the cathode catalyst layer may include a catalyst for a carbon dioxide reduction reaction including one or more elements selected from the group consisting of Ag, Au, Zn, In, Cu, Ni, Pt, Pd, Ti, Fe, Ga, and Sn.

According to one embodiment of the present invention, the electrochemical cell may be a cell that converts carbon dioxide and water vapor into carbon monoxide and hydroxide ions by electrolysis, and may also be utilized in all electrochemical conversion devices capable of producing useful chemical substances through electrochemical conversion, such as fuel cells and water electrolysis devices, in addition to carbon dioxide electrolysis devices. Specifically, the electrolysis process of the carbon dioxide is as follows: In the anode catalyst layer coated on one surface of the porous substrate, an oxidation reaction of water occurs to generate oxygen gas, hydrogen ions, and electrons, wherein the generated electrons are transferred to the cathode through a conductive wire. In the cathode, carbon dioxide and water vapor supplied from the gas diffusion layer react with electrons moved from the anode catalyst layer and are decomposed into carbon monoxide and hydroxide ions, wherein the generated hydroxide ions pass through the porous substrate of the separation membrane in a state of being contained in the electrolyte and move to the anode catalyst layer. Then, in the anode catalyst layer, the hydroxide ions are oxidized to generate oxygen gas, water, and electrons. In the electrochemical cell of the present invention, the electrochemical decomposition reaction of carbon dioxide proceeds.

According to one embodiment of the present invention, the cathode may have a cathode catalyst layer coated on one surface of the gas diffusion layer. Specifically, unlike the anode, the cathode catalyst layer may not be coated on one surface of the porous substrate, but may be coated on one surface of the gas diffusion layer and may be in contact with the other surface of the porous substrate. In the electrochemical cell of the present invention, since the cathode catalyst layer is in contact with the other surface of the porous substrate in a state of being coated on one surface of the gas diffusion layer rather than the other surface of the porous substrate, there is an advantage in that the thickness of the separation membrane is thinner compared to a case where the cathode catalyst layer is coated on the other surface of the separation membrane, thereby reducing the resistance of the separation membrane. In addition, there is an advantage in that the interfacial resistance between the gas diffusion layer and the cathode catalyst layer can be reduced compared to a case where the cathode catalyst layer is coated on a substrate separate from the gas diffusion layer, and the structure of the electrochemical cell can also be simplified because a separate substrate is not required.

## Method for manufacturing an electrochemical cell

The present invention provides a method for manufacturing the electrochemical cell described above.

According to one embodiment of the present invention, the method for manufacturing the electrochemical cell may include the steps of: (S10) manufacturing a separation membrane by coating an anode catalyst layer on any one surface of a porous substrate; and (S20) disposing a cathode to contact the other surface of the separation membrane which is not coated with the anode catalyst layer in step (S10), wherein the anode catalyst layer includes metal particles and a binder.

The step (S10) is a step of preparing the separation membrane of the present invention described above, and may be a step of coating the anode catalyst layer including the metal particles and the binder on any one surface of the porous substrate. The metal particles included in the anode catalyst layer may be metal particles including at least one element selected from the group consisting of Ir, Pt, Au, Pd, Ag, Rh, Ru, Ni, Al, Mo, Cr, Cu, Ti, W, and Ta, and the listed elements may act as catalysts for oxidation reactions in the anode catalyst layer to lower activation energy for the oxidation reaction of water and hydroxide ion. The separation membrane manufactured through the step (S10) has the advantage of lowering the overvoltage of the electrode by reducing the interfacial resistance between the separation membrane and the anode catalyst layer as the anode catalyst layer is coated on one surface of the porous substrate. In addition, since the hydroxide ions generated at the cathode can pass through the porous substrate and then immediately meet the anode catalyst layer, the movement distance of the ions is shortened, thereby having the advantage of improving the performance of the electrode.

The above step (S20) is a step of disposing the cathode so as to be contacted with the other surface of the separation membrane which is not coated with the anode catalyst layer, wherein the cathode may be a cathode catalyst layer coated on a gas diffusion layer, or on a substrate separate from the porous substrate and the gas diffusion layer. That is, the method for manufacturing the electrochemical cell of the present invention is characterized in that the cathode catalyst layer is not coated on the other surface of the porous substrate, because, if the cathode catalyst layer is coated on the other surface of the porous substrate, the cathode catalyst particles may impede the movement of hydroxide ions to the anode, which may increase resistance. Also, this is because, if the cathode catalyst layer is coated on the other surface, the thickness of the separation membrane may become thicker, which may increase resistance due to the separation membrane, resulting in problems such as increased overvoltage. Specifically, the cathode may be in a form in which the cathode catalyst layer is coated on one surface of the gas diffusion layer, wherein the cathode catalyst layer may include a catalyst for a carbon dioxide reduction reaction including one or more elements selected from the group consisting of Ag, Au, Zn, In, Cu, Ni, Pt, Pd, Ti, Fe, Ga, and Sn.

According to one embodiment of the present invention, the step (S10) may include the steps of: (S11) preparing an anode catalyst ink by mixing metal particles, a binder, and a solvent; (S12) applying the anode catalyst ink to a transfer film to prepare an anode catalyst layer; and (S13) transferring the anode catalyst layer to any one surface of the porous substrate to coat the anode catalyst layer. The step (S10) may be a step of manufacturing the separation membrane by preparing an anode catalyst layer on a transfer film and then performing coating by transferring the anode catalyst layer to one surface of the porous substrate. Specifically, in the step (S11), metal particles, a binder, and a solvent are mixed to prepare an anode catalyst ink, and then in the step (S12), the catalyst ink is applied to a transfer film separate from the porous substrate and dried to prepare a solid anode catalyst layer. Next, in the step (S13), the anode catalyst layer formed on the transfer film is transferred to one surface of the porous substrate to manufacture a separation membrane having the anode catalyst layer coated on one surface of the porous substrate. Compared to the method of coating by directly applying the anode catalyst ink to one surface of the porous substrate, when the coating is performed in a transfer manner as in the steps (S11) to (S13), there is an advantage in that the problem of the substrate swelling due to moisture can be prevented by applying the liquid catalyst ink to one surface of the porous substrate. In addition, since the solid anode catalyst layer is transferred to one surface of the porous substrate, there is also an advantage in that it is possible to prevent the problem of the liquid catalyst ink penetrating into the pores of the porous substrate and then reaching the cathode to cause the function of the electrochemical cell to be lost, thereby enabling the safe manufacture of the electrochemical cell. That is, when manufacturing the separation membrane according to the steps (S11) to (S13), there is an advantage in that since the solid anode catalyst layer is coated on the porous substrate, the porous substrate does not swell due to moisture and liquid anode catalyst ink does not penetrate into the pores.

Hereinafter, the present invention will be described in more detail by way of examples and experimental examples to specifically illustrate the present invention, but the present invention is not limited to these examples and experimental examples. However, the examples according to the present invention may be modified in various different forms, and the scope of the present invention should not be construed as being limited to the examples described in detail below. The examples of the present invention are provided to explain the present invention more completely to those skilled in the art.

**Examples and Comparative Examples**

**Example 1**

An anode catalyst ink was prepared by mixing 1 g of metal particles ($TiO_2$ with IrO(OH) attached) with 4.6 mL of a solution containing 1-propanol, ultrapure water, and a Nafion binder in a weight ratio of 3.3:0.42:075, respectively. The anode catalyst ink was applied to a PTFE transfer film using a bar coating device and then dried to prepare an anode catalyst layer. Subsequently, the PTFE film coated with the anode catalyst layer was laminated on a porous polyethersulfone substrate having an average pore diameter of 200 nm, porosity of 77 volume%, and a thickness of 150 $\mu$m, and then transferred by using a press machine. Thereafter, the PTFE film was removed to manufacture a separation membrane in which the anode catalyst layer was coated on one surface of the polyethersulfone porous substrate. The content per unit area of iridium in the anode catalyst layer was 0.4 mg/cm$^2$, and the thickness of the anode catalyst layer was 10 $\mu$m. Additionally, the average particle diameter($D_{SEM}$) of the primary particles of the metal particles in the anode catalyst layer was 25 nm, and the average particle diameter($D_{50}$) of the secondary particles was 600 nm.

**Example 2**

A separation membrane having an anode catalyst layer coated on one surface was manufactured under the same conditions as in Example 1, except that cellulose acetate (thickness: 125 $\mu$m, porosity: 69 volume%, average pore diameter: 200 nm) was used instead of the polyethersulfone porous substrate.

**Example 3**

A separation membrane having an anode catalyst layer coated on one surface was manufactured under the same conditions as in Example 1, except that the iridium content per unit area in the anode catalyst layer was adjusted to 0.7 mg/cm$^2$ instead of 0.4 mg/cm$^2$.

**Example 4**

A separation membrane having an anode catalyst layer coated on one surface was manufactured under the same conditions as in Example 1, except that a Zirfon220 separation membrane(thickness: 220 $\mu$m, porosity: 55 volume%, average pore diameter: 150 nm) was used instead of the polyethersulfone porous substrate.

**Comparative Example 1**

The same polyethersulfone porous substrate as used in the above examples was used as a separation membrane. However, unlike Example 1, the anode catalyst layer was not coated on the polyether sulfone porous substrate, a titanium mesh substrate coated with iridium particles was used as the anode, and the anode was disposed to be in contact with one surface of the separation membrane.

**Comparative Example 2**

A separation membrane having an anode catalyst layer coated on one surface was manufactured under the same conditions as in Example 1, except that a Nafion separation membrane, which is a cation exchange membrane, was used instead of the polyethersulfone porous substrate.

**Comparative Example 3**

A separation membrane having an anode catalyst layer coated on one surface was manufactured under the same conditions as in Example 1, except that an Aemion separation membrane, which is an anion exchange membrane, was used instead of the polyethersulfone porous substrate.

**Comparative Example 4**

A separation membrane having a cathode catalyst layer coated on one surface of a porous substrate was manufactured under the same conditions as in Example 1, except that a cathode catalyst layer containing Ag particles instead of the anode catalyst layer was coated on one surface of the polyethersulfone porous substrate.

**Comparative Example 5**

A separation membrane having an anode catalyst layer and a cathode catalyst layer each coated on the surfaces of a porous substrate was manufactured under the same conditions as in Example 1, except that a cathode catalyst layer containing Ag particles was coated on the other side of the polyethersulfone porous substrate on which the anode catalyst layer was not coated.

**Comparative Example 6**

A separation membrane was manufactured under the same conditions as in Example 1, except that a polyethersulfone porous substrate having a porosity of 19.0% by volume was used.

**Experimental Example**

(1) Manufacturing of electrochemical cells

A cathode catalyst ink including Ag particles was coated on one surface of a gas diffusion layer (JNT30-A6P (JNTG)) having an area of 25 cm$^2$ at 120°C using an Ultrasonic spray coater to prepare a cathode. In the case of Examples and Comparative Examples 2 and 3, the cathode was disposed to be in contact with the other surface of the separation membrane on which the anode catalyst layer was not coated, thereby manufacturing an electrochemical cell. In the case of Comparative Example 1, the cathode was disposed to be in contact with the other surface of the separation membrane with which the anode was not in contact, and in the case of Comparative Examples 4 and 5, the anode of Comparative Example 1 was disposed to be in contact with the other surface of the separation membrane on which the cathode catalyst layer was not coated, thereby manufacturing electrochemical cells.

(2) Evaluation of electrochemical performance according to current density

The above electrochemical cells were used to perform a reaction for 30 minutes, wherein 0.5 M CsHCO$_3$ as an electrolyte was supplied to the anode at a temperature of 40°C at a rate of 25 mL/min, and humidified carbon dioxide was supplied to the cathode at a temperature of 40°C at a rate of 200 mL/min. Current densities of 100, 200, and 300 mA/cm$^2$ were applied for 30 minutes using VSP Potentiostat (BioLogic), and reaction voltages of 1 to 4 V were applied to measure overvoltage, carbon dioxide conversion rate, and Faraday efficiency for the products.

The measurement of the overvoltage was performed through the VSP Potentiostat (BioLogic). A booster of 80 A was installed to apply current corresponding to a large area, and in the current application, 100, 200, and 300 mA/cm$^2$ were maintained for a certain period of time, respectively, and then the voltage at the time point when 15 minutes elapsed was recorded.

The conversion rate of carbon dioxide was calculated as a ratio of carbon monoxide to the amount of carbon dioxide gas input per hour, and the Faraday efficiency was measured by gas chromatography (GC) analysis of the gas composition in the discharge line. The Faraday efficiency was calculated through the following equation:

[Equation 1]

$$FE_{product}\ (\%) = \frac{i_{product}}{i_{total}} \times 100 = \frac{V_{product}\ \times\ Q\ \times \frac{2F_p}{RT}}{i_{total}} \times 100$$

wherein Q is a flow rate in a discharge line, F is a Faraday constant, p is a pressure, T is a measurement temperature, and R is an ideal gas constant. The total current($i_{total}$) is the value of the total current applied over time, and the current for the product($i_{product}$) is the value calculated from the gas volume ($V_{product}$) measured by GC analysis.

[Table 1]

| Division | Perform ance | Example 1 | Example 2 | Example 3 | Example 4 | Comparati ve Example 1 |
|---|---|---|---|---|---|---|
| 100 mA/cm² | Overvol tage (V) | -2.559 | -2.500 | -2.52 | -2.62 | -2.84 |
| | CO Faraday Efficien cy (%) | 97.09 | 100.00 | 95.84 | 99.56 | 99 |
| | $H_2$ Faraday Efficien cy (%) | 9.55 | 1.01 | 10.36 | 0.79 | 0.25 |
| | $CO_2$ Convers ion rate (%) | 9.5 | 9.86 | 9.22 | 9.74 | 9.96 |
| 200 mA/cm² | Overvol tage (V) | -2.679 | -2.640 | -2.68 | -2.82 | -3.111 |
| | CO Faraday Efficien cy (%) | 100 | 100.00 | 92.31 | 95.18 | 95.46 |
| | $H_2$ Faraday Efficien cy (%) | 4.13 | 0.2 | 5.02 | 0.7 | 0.23 |
| | $CO_2$ Convers ion rate (%) | 21.19 | 18.78 | 17.76 | 18.62 | 19.22 |
| 300 mA/cm² | Overvoltage (V) | -2.785 | -2.9 | -2.85 | -2.99 | -3.301 |
| | CO Faraday Efficien cy (%) | 94.98 | 95.84 | 92.00 | 92.58 | 92.55 |
| | $H_2$ Faraday Efficien cy (%) | 2.77 | 0.6 | 3.01 | 1.15 | 0.36 |
| | $CO_2$ Convers ion rate (%) | 27.87 | 26.63 | 25.30 | 27.17 | 27.95 |

[Table 2]

| Division | Perform ance | Comparati ve Example 2 | Comparati ve Example 3 | Comparati ve Example 4 | Comparati ve Example 5 | Comparati ve Example 6 |
|---|---|---|---|---|---|---|
| 100 mA/cm² | Overvol tage (V) | -2.873 | -2.585 | -3.753 | - (>5 V) | - (>5 V) |
| | CO Faraday Efficien cy (%) | 64.91 | 10.26 | 78.69 | - | - |
| | $H_2$ Faraday Efficien cy (%) | 38.58 | 93.96 | 10.22 | - | - |
| | $CO_2$ Convers ion rate (%) | 3.71 | 8.89 | 7.57 | - | - |
| 200 mA/cm² | Overvol tage (V) | -3.028 | -2.759 | - | - | - |
| | CO Faraday Efficien cy (%) | 61.81 | 4.73 | - | - | - |
| | $H_2$ Faraday Efficien cy (%) | 38.49 | 90.18 | - | - | - |
| | $CO_2$ Convers ion rate (%) | 7.41 | 17.07 | - | - | - |

(continued)

| Division | Perform ance | Comparati ve Example 2 | Comparati ve Example 3 | Comparati ve Example 4 | Comparati ve Example 5 | Comparati ve Example 6 |
|---|---|---|---|---|---|---|
| 300 mA/cm$^2$ | Overvol tage (V) | -3.103 | -2.888 | - | - | - |
| | CO Faraday Efficien cy (%) | 66.91 | 2.91 | - | - | - |
| | H$_2$ Faraday Efficien cy (%) | 32.33 | 86.34 | - | - | - |
| | CO$_2$ Convers ion rate (%) | 9.33 | 24.51 | - | - | - |

As shown in Tables 1 and 2 above, in the case of the electrochemical cells of Examples 1 to 4 using the separation membrane having the anode catalyst layer coated on one surface of the porous substrate, the overvoltage was lower than that of the electrochemical cell of the comparative examples at all current densities, and furthermore, as the current density increased, the overvoltage of the examples was significantly lower than that of the comparative example. In particular, in the case of the electrochemical cells of Comparative Examples 4 to 6 in which the cathode catalyst layer was coated on one surface of the porous substrate, not only could the overvoltage not be measured because it exceeded the limit of the measuring device, 5 V, but also the carbon dioxide conversion rate and the faradaic efficiency of the product could not be measured. In the case of Comparative Example 4 in which the cathode catalyst layer was coated on one surface of the porous substrate, the cathode catalyst particles hindered the movement of hydroxide ions through the separation membrane, thereby increasing the resistance due to the separation membrane, and as a result, the overvoltage was significantly high. In addition, in the case of Comparative Example 5 in which the anode catalyst layer and the cathode catalyst layer were coated on both surfaces of the porous substrate, respectively, in addition to the resistance-increasing effect of the cathode catalyst particles, the thickness of the separation membrane was thicker than in the examples, thereby further increasing the resistance, and as a result, the overvoltage was high enough to exceed 5 V at all current densities.

In addition, in the case of Comparative Example 6, in which the porosity was outside the range of the present invention, the overvoltage was so high as to exceed 5 V at all current densities as in Comparative Example 5, making measurement impossible.

In addition, when comparing the electrochemical cells of Examples 1 and 2, in which the anode catalyst layer was coated on one surface of the porous substrate, and the Comparative Example 1, which used the separation membrane in which the anode catalyst layer was not coated on one surface of the porous substrate, the electrochemical cells of Examples 1 and 2 were found to have low overvoltages at all current densities. In the case of Comparative Example 1 in which the anode catalyst layer is not coated on the separation membrane, the resistance may increase as the gap between the anode and the separation membrane increases during operation of the electrochemical cell, and as a result, the overvoltage was higher than that of the Examples. From this, it can be confirmed that the separation membrane of the present invention reduced the interfacial resistance between the separation membrane and the anode by coating the anode catalyst layer on one surface of the porous substrate, thereby lowering the overvoltage.

Meanwhile, when comparing the electrochemical cells of Comparative Examples 2 and 3 using the conventional Nafion and Aemion separation membranes with the electrochemical cells of Examples 1 and 2, it can be confirmed that the electrochemical cells using the separation membrane of the examples have not only a low overvoltage but also a high conversion rate of carbon dioxide. This is because, unlike an ion exchange membrane, the separation membrane of the present invention has pores, so that hydroxide ions generated at the cathode can quickly move to the anode through the pores in a state of being contained in the electrolyte. Therefore, it can be confirmed that the separation membrane of the present invention enables the manufacture of an electrochemical cell having a low overvoltage and further an excellent carbon dioxide conversion rate compared to the conventional ion separation membranes such as Nafion and Aemion. In addition, since it uses the porous substrate that is cheaper than the ion separation membrane, it also has an economic advantage and thus is suitable for mass production.

From these results, it can be confirmed that the separation membrane of the present invention enables hydroxide ions generated at the cathode to move smoothly through the pores of the porous substrate, and has a low interfacial resistance between the anode and the separation membrane by coating the anode catalyst layer on one surface of the separation membrane, thereby enabling the production of an electrochemical cell having low overvoltage and excellent electrode performance through the separation membrane of the present invention.

**Claims**

1. A separation membrane including: a porous substrate and an anode catalyst layer,

     wherein the anode catalyst layer includes metal particles and a binder, and
     the anode catalyst layer is coated on any one surface of the porous substrate.

2. The separation membrane according to claim 1, wherein the pores of the porous substrate have an average diameter of 10 nm or more and 500 nm or less.

3. The separation membrane according to claim 1, wherein the porosity of the porous substrate is 50% by volume or more and 95% by volume or less.

4. The separation membrane according to claim 1, wherein the thickness of the porous substrate is 10 $\mu$m or more and 500 $\mu$m or less.

5. The separation membrane according to claim 1, wherein the porous substrate is at least one selected from the group consisting of polyethersulfone, polytetrafluoroethylene, polyethylene, polypropylene, polyethylene terephthalate, polyester, polyetheretherketone, polyaryletherketone, polyetherimide, polyamideimide, polybenzimidazole, polyethylenenaphthalene, polyvinylidene fluoride, cellulose acetate, and nylon.

6. The separation membrane according to claim 1, wherein the content per unit area of the oxidation catalyst in the anode catalyst layer is 0.1 mg/cm$^2$ or more and 3.0 mg/cm$^2$ or less.

7. The separation membrane according to claim 1, wherein the thickness of the anode catalyst layer is 1 $\mu$m or more and 30 $\mu$m or less.

8. The separation membrane according to claim 1, wherein the metal particles have an average particle diameter of primary particles ($D_{SEM}$) of 20 nm or more and 30 nm or less.

9. The separation membrane according to claim 1, wherein the metal particles have an average particle diameter of secondary particles ($D_{50}$) of 100 nm or more and 2,000 nm or less.

10. An electrochemical cell including: the separation membrane according to claim 1 and a cathode,
    wherein the cathode is in contact with the other surface of the separation membrane on which the anode catalyst layer is not coated.

11. The electrochemical cell according to claim 10, wherein the cathode has a cathode catalyst layer coated on one surface of a gas diffusion layer.

12. A method for manufacturing an electrochemical cell, the method including the steps of:

     (S10) manufacturing a separation membrane by coating an anode catalyst layer on any one surface of a porous substrate; and
     (S20) disposing a cathode to contact the other surface of the separation membrane which is not coated with the anode catalyst layer in step (S10),
     wherein the anode catalyst layer includes metal particles and a binder.

13. The method for manufacturing an electrochemical cell according to claim 12, wherein the step (S10) includes the steps of:

     (S11) preparing an anode catalyst ink by mixing metal particles, a binder, and a solvent;
     (S12) applying the anode catalyst ink to a transfer film to prepare an anode catalyst layer; and
     (S13) transferring the anode catalyst layer to any one surface of the porous substrate to coat the anode catalyst layer.

## INTERNATIONAL SEARCH REPORT

| International application No. |
|---|
| **PCT/KR2024/012952** |

**A.      CLASSIFICATION OF SUBJECT MATTER**

**C25B 13/02**(2006.01)i; **C25B 13/08**(2006.01)i; **C25B 11/052**(2021.01)i; **C25B 9/23**(2021.01)i; **C25B 11/032**(2021.01)i; **B01J 37/02**(2006.01)i; **C25B 3/26**(2021.01)i; **C25B 1/04**(2006.01)i; **C25B 1/23**(2021.01)i

According to International Patent Classification (IPC) or to both national classification and IPC

**B.      FIELDS SEARCHED**

Minimum documentation searched (classification system followed by classification symbols)

C25B 13/02(2006.01); B01J 37/025(2006.01); C25B 1/04(2006.01); C25B 1/12(2006.01); C25B 1/46(2006.01); H01M 4/88(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 다공성 기재(porous substrate), 애노드 촉매층(anode catalyst layer), 금속 입자(metal particle), 산화 촉매(oxidation catalyst), 전기화학 셀(electrochemical cell)

**C.      DOCUMENTS CONSIDERED TO BE RELEVANT**

| Category* | Citation of document, with indication, where appropriate, of the relevant passages | Relevant to claim No. |
|---|---|---|
| X | KR 10-2023-0101340 A (KOREA INSTITUTE OF ENERGY RESEARCH) 06 July 2023 (2023-07-06) See paragraphs [0004], [0024]-[0025], [0030], [0032], [0048]-[0049], [0060]-[0063] and [0070]. | 1-13 |
| A | KR 10-2023-0121999 A (GREENERITY GMBH) 22 August 2023 (2023-08-22) See entire document. | 1-13 |
| A | KR 10-2008-0080361 A (BYD COMPANY LIMITED) 03 September 2008 (2008-09-03) See entire document. | 1-13 |
| A | KR 10-1988-0007800 A (THE DOW CHEMICAL COMPANY) 29 August 1988 (1988-08-29) See entire document. | 1-13 |
| A | JP 2019-157212 A (HONDA MOTOR CO., LTD.) 19 September 2019 (2019-09-19) See entire document. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2024** | **10 December 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 737 615 A1

## INTERNATIONAL SEARCH REPORT
### Information on patent family members

International application No.

**PCT/KR2024/012952**

| Patent document cited in search report | | | Publication date (day/month/year) | Patent family member(s) | | | Publication date (day/month/year) |
|---|---|---|---|---|---|---|---|
| KR | 10-2023-0101340 | A | 06 July 2023 | KR | 10-2642597 | B1 | 04 March 2024 |
| | | | | US | 2023-0203679 | A1 | 29 June 2023 |
| KR | 10-2023-0121999 | A | 22 August 2023 | CA | 3194898 | A1 | 21 April 2022 |
| | | | | CN | 116325242 | A | 23 June 2023 |
| | | | | EP | 4229687 | A1 | 23 August 2023 |
| | | | | JP | 2023-546077 | A | 01 November 2023 |
| | | | | US | 2023-0374679 | A1 | 23 November 2023 |
| | | | | WO | 2022-078872 | A1 | 21 April 2022 |
| KR | 10-2008-0080361 | A | 03 September 2008 | CN | 100515566 | C | 22 July 2009 |
| | | | | CN | 1981934 | A | 20 June 2007 |
| | | | | EP | 1963013 | A1 | 03 September 2008 |
| | | | | EP | 1963013 | A4 | 07 January 2009 |
| | | | | EP | 1963013 | B1 | 17 March 2010 |
| | | | | JP | 2009-518817 | A | 07 May 2009 |
| | | | | KR | 10-0978117 | B1 | 25 August 2010 |
| | | | | US | 2007-0134407 | A1 | 14 June 2007 |
| | | | | US | 2008-0305250 | A1 | 11 December 2008 |
| | | | | WO | 2007-068199 | A1 | 21 June 2007 |
| KR | 10-1988-0007800 | A | 29 August 1988 | EP | 0275466 | A1 | 27 July 1988 |
| | | | | EP | 0275466 | B1 | 30 September 1992 |
| | | | | JP | 63-058917 | B2 | 17 November 1988 |
| | | | | JP | 63-179088 | A | 23 July 1988 |
| | | | | KR | 10-1990-0000572 | B1 | 31 January 1990 |
| | | | | US | 4752370 | A | 21 June 1988 |
| | | | | US | 4889577 | A | 26 December 1989 |
| JP | 2019-157212 | A | 19 September 2019 | CN | 210151221 | U | 17 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230116359